# EUROPÄISCHE PATENTANMELDUNG

(11) **EP 2 390 633 A1**
(43) Veröffentlichungstag der Anmeldung: **30.11.2011**
(21) Anmeldenummer: 10164286.6
(22) Anmeldetag: 28.05.2010
(51) Int. Cl.: G01F 15/00, G09F 3/03, F16B 41/00

(54) **Plombierhülse und Kombination einer Plombierhülse mit einer Sensorvorrichtung**

(71) Anmelder: Allmess GmbH, 23758 Oldenburg (DE)
(72) Erfinder: Szabo, Reno, D-23758 Oldenburg (DE); Dietze, Ehrhardt, D-23558 Lübeck (DE)
(74) Vertreter: UEXKÜLL & STOLBERG

(57) **Zusammenfassung**

Die Erfindung betrifft eine Plombierhülse zur Manipulationssicherung einer Schraubverbindung zwischen einer Sensorvorrichtung (3) und einem von einem Gehäuse (1) vorstehenden geraden, länglichen Adapterelement (2), die durch Verschrauben einer Mutter (4), die am Ende des Adapterelements (2) oder an der Sensorvorrichtung (3) vorgesehen ist, mit einem passenden Gewinde an der Sensorvorrichtung (3) bzw. am Ende des Adapterelements (2) hergestellt ist, wobei das durch das Adapterelement (2) und die Mutter (4) gebildete Bauteil entlang seiner Längsachse einen ersten und einen zweiten Abschnitt aufweist, der zwischen der Mutter (4) und dem Gehäuse (1) angeordnet ist und einen geringeren Durchmesser als die Mutter (4) hat. Die Plombierhülse (8) hat ein hülsenförmiges Element (15) mit einer geraden Längsachse, einem offenen Einführende (9) und einem quer zur Längsachse verlaufenden ring- oder ringsegmentförmigen Vorsprung (18), der von der Innenfläche des hülsenförmigen Elements (15) vorsteht, von dessen Enden (9, 16) beabstandet ist und einen Abschnitt verringerten lichten Durchmessers seines Innenraums definiert. Wenn die Plombierhülse (8) so auf dem Bauteil angeordnet ist, dass sich das Adapterelement (2) durch den Abschnitt verringerten lichten Durchmessers erstreckt und der erste Abschnitt des Bauteils mit einem demgegenüber größeren Durchmesser jenseits des Abschnitts verringerten lichten Durchmessers angeordnet ist, das hülsenförmige Element (15) nicht vom Bauteil entfernt werden kann, ohne die Schwächungszone (21; 34) oder einen anderen Teil des hülsenförmigen Elements (15) irreversibel zu zerstören. Die Erfindung betrifft ferner eine Kombination einer Plombierhülse (8) und einer Sensorvorrichtung (3).

## Beschreibung

Die vorliegende Erfindung betrifft eine Plombierhülse zur Manipulationssicherung einer Schraubverbindung zwischen einer Sensorvorrichtung und einem von einem Gehäuse vorstehenden geraden, länglichen Adapterelement, die durch Verschrauben einer Mutter, die an dem dem Gehäuse gegenüberliegenden Ende des länglichen Adapterelements oder an der Sensorvorrichtung vorgesehen ist, mit einem passenden Gewinde an der Sensorvorrichtung bzw. an dem Ende des länglichen Adapterelements hergestellt ist, wobei das durch das längliche Adapterelement und die Mutter gebildete Bauteil entlang seiner Längsachse einen Abschnitt aufweist, der zwischen der Mutter und dem Gehäuse angeordnet ist und der einen geringeren Durchmesser als die Mutter hat. Ferner betrifft die vorliegende Erfindung eine entsprechende Kombination einer Plombierhülse und einer Sensorvorrichtung.

In verschiedenen Bereichen der Technik ist es erforderlich, eine Sensorvorrichtung, wie zum Beispiel einen Temperaturfühler, in der Weise an einem Gehäuse zu befestigen, dass sich ein Teil der Sensorvorrichtung zur Messung einer physikalischen Größe in das Gehäuseinnere erstreckt, während ein anderer Teil der Sensorvorrichtung, der u.a. Daten- und/oder Energieversorgungskabel umfassen kann, außerhalb des Gehäuses angeordnet ist. Ein Beispiel sind die Gehäuse von Mess- oder Regeleinrichtungen in Rohrleitungssystemen zur Leitung von Flüssigkeiten oder Gasen, wie etwa die Gehäuse von Durchflussmessern und insbesondere volumetrischen Durchflussmessern oder Durchflussmengenzählern oder die Gehäuse von Kugelhähnen. So werden beispielsweise Gas-, Wärme- und Wassermengenmesseinrichtungen von Versorgungs- und Abrechnungsunternehmen in allen Bereichen der Wirtschaft, des öffentlichen Lebens und in Haushalten eingesetzt, um die verbrauchten Gas-, Wärme- bzw. Wassermengen zu ermitteln. Derartige Mess- oder Regeleinrichtungen weisen üblicherweise ein in einer Rohrleitung installiertes Anschlussgehäuse auf, in das unmittelbar oder über einen geeigneten Adapter eine Sensorvorrichtung eingeschraubt sein kann.

Es ist häufig von großer Bedeutung, eine Entfernung der Sensorvorrichtung von dem Gehäuse und eine Manipulation an der Sensorvorrichtung durch unbefugte Personen zu verhindern oder zumindest irreversible Anzeichen für den Versuch einer derartigen Manipulation zu schaffen.

Zu diesem Zweck sind verschiedene Plombiereinrichtungen bekannt, die beispielsweise die Form eines Plombierdrahtes annehmen können, der zum einen durch eine an der Sensorvorrichtung ausgebildete Bohrung und zum anderen durch eine an dem Gehäuse ausgebildete Bohrung gefädelt wird und mit Hilfe einer geeigneten Plombe ringförmig geschlossen wird. Nach der Plombierung kann die Sensorvorrichtung nicht von dem Gehäuse entfernt werden, ohne den Plombierdraht oder die Plombierung irreversibel zu beschädigen. Eine derartige Drahtplombierung ist insbesondere bei Gehäusen, die sich an schwer zugänglichen Stellen oder an Orten mit unzureichendem Licht befinden, kompliziert und nur mit erheblichem Zeitaufwand zu montieren, u.a. weil es schwierig ist, den Plombierdraht durch die regelmäßig kleinen Bohrungen zu fädeln. Außerdem ist noch der anschließende Plombierschritt zur Ausbildung einer Drahtschlaufe notwendig.

Ferner sind Plombierhülsen bekannt, die am Montageort aus zwei separaten Halbschalen zusammengesetzt werden und anschließend eine Verschraubung zwischen der Sensorvorrichtung und dem Gehäuse bzw. einem von dem Gehäuse vorstehenden Adapterelement abdecken. Die Halbschalen werden dabei vor Ort separat um die miteinander verschraubten Komponenten gelegt und so miteinander verbunden, dass sie ohne eine Zerstörung von Teilen der Halbschalen nicht mehr voneinander gelöst werden können. Auch hier besteht der Nachteil, dass die Montage vor Ort kompliziert und zeitaufwändig ist. So ist es beispielsweise schwierig, die Halbschalen zum Zwecke ihrer Verbindung genau zueinander und ggf. auch zu den verschraubten Komponenten auszurichten, und es besteht die Gefahr, dass sie herunterfallen und dabei möglicherweise verloren gehen.

Bei dem regelmäßig zur Sicherstellung einer fehlerfreien Messung erforderlichen Austausch der Sensorvorrichtung werden die genannten Plombierlösungen zerstört, die Schraubverbindung zwischen der alten Sensorvorrichtung und dem Gehäuse bzw. dem länglichen Adapterelement wird gelöst, eine neue Sensorvorrichtung wird mit dem Gehäuse bzw. dem länglichen Adapterelement verschraubt und die Plombierung wird erneut hergestellt. Dieser Austausch ist für den Monteur vor Ort mit einem hohen Aufwand verbunden und muss - auch aufgrund der z.B. ggf. bestehenden Notwendigkeit der vorübergehenden Unterbrechung einer Flüssigkeits- oder Gasversorgung durch ein entsprechendes Rohrleitungssystem - so einfach und schnell wie möglich zu bewerkstelligen sein.

Es ist Aufgabe der vorliegenden Erfindung, eine einfach und kostengünstig herzustellende Plombiervorrichtung bereitzustellen, die so ausgestaltet ist, dass eine einfache und schnelle Montage möglich ist.

Diese Aufgabe wird durch eine Plombierhülse mit den Merkmalen des Patentanspruchs 1 und durch eine Kombination aus einer Plombierhülse und einer Sensorvorrichtung mit den Merkmalen des Patentanspruchs 10 gelöst. Vorteilhafte Ausführungsformen der Plombierhülse und der Kombination sind Gegenstand der jeweils zugehörigen Unteransprüche.

Durch die vorliegende Erfindung wird eine Plombierhülse bereitgestellt, die konstruktiv ausgebildet ist, um eine Schraubverbindung zwischen einer Sensorvorrichtung und einem von einem Gehäuse vorstehenden geraden, länglichen Adapterelement gegen Manipulation zu sichern. Dabei ist die Schraubverbindung durch Verschrauben einer Mutter, die an dem dem Gehäuse gegenüberliegenden Ende des länglichen Adapterelements oder an der Sensorvorrichtung vorgesehen ist, mit einem passenden Gewinde an der Sensorvorrichtung bzw. an dem Ende des länglichen Adapterelements hergestellt, wobei die Anordnung der Mutter an der Sensorvorrichtung bevorzugt ist. Ferner weist das im verschraubten Zustand durch das längliche Adapterelement und die Mutter gebildete Bauteil entlang seiner Längsachse einen ersten und einen zweiten Abschnitt auf. Der erste Abschnitt umfasst die Mutter, und der zweite Abschnitt, der beispielsweise zylindrisch oder ringförmig sein kann, ist zwischen dem ersten Abschnitt und dem Gehäuse angeordnet und hat zumindest in einem an den ersten Abschnitt angrenzenden Bereich einen geringeren Durchmesser als zumindest ein an den zweiten Abschnitt angrenzender Bereich des ersten Abschnitts. Bei Anordnung der Mutter an der Sensorvorrichtung kann die Grenze zwischen dem ersten und zweiten Abschnitt beispielsweise durch das entsprechende Ende bzw. den entsprechenden Rand der Mutter gebildet werden, das bzw. der dann aus Sicht der Mutter eine zurückspringende Ringschulter darstellt.

Wie im Folgenden erläutert wird, ist die Plombierhülse - die in jedem Anwendungsfall in der nachfolgend beschriebenen Weise an die jeweiligen genannten, miteinander zu verschraubenden Elemente bzw. Komponenten der Sensorvorrichtung und des länglichen Adapterelements, d.h. insbesondere an das Bauteil, angepasst ist - zur Verwirklichung der Manipulationssicherung so ausgestaltet, dass sie über miteinander verschraubten Elementen bzw. Komponenten angeordnet werden und diese ringförmig umschließen kann und dann jedes von ihnen vollständig oder zumindest teilweise in der Weise abdeckt, dass Schraubprofilierungen oder allgemein zum Angriff von Werkzeugen geeignete Flächen dieser Elemente oder Komponenten nicht zum Lösen der Schraubverbindung zugänglich sind. Die Abdeckung ist manipulationssicher, weil nach Anordnung der Plombierhülse in dieser Position die Abdeckung durch Entfernung oder Verschiebung der Plombierhülse nicht aufgehoben werden kann, ohne an der Plombierhülse einen Hinweis auf die vorgenommene Manipulation zu hinterlassen.

Zu diesen Zwecken weist die Plombierhülse ein hülsenförmiges Element mit einer geraden Längsachse und einem offenen Einführende auf, d.h. einem Ende, durch das Elemente in den Innenraum des hülsenförmigen Elements eingeführt werden können, wie z.B. eine Mutter und zumindest ein an diese angrenzender Abschnitt eines länglichen Adapterelements, auf dessen Ende die Mutter aufgeschraubt ist. Das gegenüberliegende Ende des hülsenförmigen Elements kann ebenfalls offen sein. Es ist aber bevorzugt, dass dieses Ende ganz oder teilweise geschlossen ist, wobei es in vorteilhafter Weise eine Anschlagfläche für eine durch das Einführende in den Innenraum einbringbare Mutter bilden kann, die ein Austreten der Mutter aus diesem Ende verhindert. Unter einem "hülsenförmigen Element" ist im Rahmen dieser Anmeldung in üblicher Weise ein Element zu verstehen, das rohrabschnittsförmig ist und einen durch eine umlaufende Wandung begrenzten Innenraum aufweist. Ein bevorzugtes hülsenförmiges Element hat die Form eines Hohlzylinders, wobei zumindest der Innenraum einen kreisförmigen Querschnitt hat und bevorzugt das hülsenförmige Element insgesamt kreisringförmig ist, d.h. ringförmig geschlossen ist und einen kreisförmigen Querschnitt aufweist. Es sind aber auch andere Querschnittsformen möglich. Das hülsenförmige Element erstreckt sich zwischen dem Einführende und dem gegenüberliegenden Ende, die entlang der geraden Längsachse voneinander beabstandet sind.

Das hülsenförmige Element weist ferner einen quer zur Längsachse verlaufenden ringförmigen Vorsprung oder mindestens einen ringsegmentförmigen Vorsprung auf, wobei sich der entsprechende Vorsprung von der Innenfläche des hülsenförmigen Elements in Richtung auf die Längsachse erstreckt und von jedem der beiden gegenüberliegenden Enden des hülsenförmigen Elements beabstandet ist. Unter "ringsegmentförmig" ist in diesem Zusammenhang zu verstehen, dass sich der jeweilige Vorsprung über weniger als 360° erstreckt. Dabei muss ein ringsegmentförmiger Vorsprung nicht ein Segment eines durch einen radial inneren und einen radial äußeren Kreis begrenzten Kreisrings sein. Vielmehr können der radial innere und/oder der radial äußere Rand des Vorsprungs auch von einem Kreisabschnitt abweichende Verläufe haben.

Der der Innenfläche abgewandte innere (d.h. der achsnächste) Rand des ringförmigen Vorsprungs bzw. des mindestens einen ringsegmentförmigen Vorsprungs verläuft auf einer ringförmig geschlossenen Linie, die sich bevorzugt senkrecht zur Längsachse des hülsenförmigen Elements erstreckt und konzentrisch zu dieser ist. Der Verlauf des ringförmige Vorsprungs bzw. des mindestens einen ringsegmentförmigen Vorsprungs ist so gewählt, dass er einen Abschnitt verringerten lichten Durchmessers des Innenraums des hülsenförmigen Elements definiert, auf dessen beiden Seiten sich jeweils ein Abschnitt größeren lichten Durchmessers des hülsenförmigen Elements befindet. Einer der Abschnitte größeren lichten Durchmessers erstreckt sich bevorzugt von dem Abschnitt verringerten lichten Durchmessers bis zum Einführende. Der innere Rand des ringförmigen Vorsprungs bzw. des mindestens einen ringsegmentförmigen Vorsprungs bildet bevorzugt die achsnächsten Teile der Plombierhülse, so dass er bevorzugt insgesamt den lichten Durchmesser der Plombierhülse bestimmt. Die ringförmig geschlossene Linie, auf der der innere Rand verläuft ist bevorzugt ein gedachter Kreis oder der Rand eines gedachten regelmäßigen Polygons.

In dem hülsenförmigen Element ist mindestens eine Schwächungszone ausgebildet. Die Schwächungszone und der Vorsprung sind so angeordnet und ausgebildet, dass dann, wenn die Plombierhülse in der Weise auf einem zu der Plombierhülse passenden, durch ein längliches Adapterelement und eine Mutter gebildeten Bauteil (wie oben beschrieben) angeordnet ist, dass sich das längliche Adapterelement durch das Einführende in den Innenraum des hülsenförmigen Elements und durch den Abschnitt verringerten lichten Durchmessers erstreckt und dass der erste Abschnitt des Bauteils mit einem gegenüber dem verringerten lichten Durchmesser größeren Durchmesser zwischen dem Abschnitt verringerten lichten Durchmessers und dem dem Einführende gegenüberliegenden Ende des hülsenförmigen Elements angeordnet ist, das hülsenförmige Element nicht von dem Bauteil entfernt werden kann, ohne die Schwächungszone oder einen anderen Teil des hülsenförmigen Elements irreversibel zu zerstören. Insbesondere ist es ohne eine solche Zerstörung nicht möglich, das hülsenförmige Element so zu bewegen, dass der erste Abschnitt des Bauteils durch den Abschnitt verringerten lichten Durchmessers des Innenraums hindurch gelangt. Dies wird dadurch erreicht, dass die Schwächungszone und der ringförmige Vorsprungs bzw. der mindestens eine ringsegmentförmige Vorsprung so konstruiert sind, dass bei einer Bewegung des hülsenförmige Elements in Richtung seines dem Einführende gegenüberliegenden Endes der ringförmige Vorsprungs bzw. der mindestens eine ringsegmentförmige Vorsprung den an der Grenze zwischen dem ersten und dem zweiten Abschnitt des Bauteils bestehenden vorspringenden, bevorzugt ringförmigen Rand gar nicht überwinden kann oder bevorzugt nicht überwinden kann, ohne Kräfte in einem Teil des hülsenförmigen Elements und bevorzugt in der Schwächungszone zu erzeugen, die in dem Teil bzw. der Schwächungszone zu einer irreversiblen Zerstörung führen. In vorteilhafter Weise ist dabei zumindest keine Bewegung bzw. kein Abziehen in dem Maße möglich, dass Schraubprofilierungen oder allgemein zum Angriff von Werkzeugen geeignete Flächen an den Elementen oder Komponenten des Bauteils zum Lösen der Schraubverbindung zugänglich sind. Jede der obigen Schwächungszonen stellt demnach eine Sollbruchstelle dar.

Die in dieser Weise ausgestaltete Plombierhülse hat den Vorteil, dass sie in einfacher Weise an einem Bauteil der beschriebenen Art montiert werden kann. Insbesondere ist es in vorteilhafter Weise möglich, eine derartige Plombierhülse derart an einen bestimmten Anwendungsfall mit bestimmten Abmessungen des Bauteils aus länglichem Adapterelement und Mutter anzupassen, dass das hülsenförmige Element - wie nachfolgend noch detaillierter beschrieben wird - durch einfaches Aufschieben mit seinem Einführende voran über die Mutter und zumindest einen Teil des länglichen Adapterelements montiert werden kann. Daher ist es nicht erforderlich, die Plombierhülse bei der Montage vor Ort zusammenzusetzen, wodurch auch die Probleme der Gefahr des Herunterfallens oder sogar des Verlusts von Teilen und der komplizierten Ausrichtung beseitigt werden. Die Plombierhülse kann beispielsweise vorteilhaft als Teil einer vormontierten Einheit aus Sensorvorrichtung und Plombierhülse geliefert werden, wobei das hülsenförmige Element, zumindest nach dem Herstellen der Schraubverbindung mit Hilfe der Mutter, verschiebbar oberhalb der - in diesem Fall bevorzugt an der Sensorvorrichtung vorgesehenen - Mutter angeordnet und befestigt ist, d.h. von dem länglichen Adapterelement beabstandet. In einer bevorzugten Ausgestaltung einer solchen Kombination könnte sich ein Kabel der Sensorvorrichtung oder ein anderes Führungselement durch die Mutter hindurch erstrecken, und das hülsenförmige Element könnte verschiebbar befestigt sein, indem sich das Kabel bzw. das Führungselement auch durch das hülsenförmige Element erstreckt, so dass es entlang des Kabels bzw. des Führungselements geführt in Richtung auf die Mutter und das länglichen Adapterelement verschoben werden kann. Dabei kann die obige Ausgestaltung vorteilhaft sein, in der das dem Einführende gegenüberliegende Ende teilweise geschlossen ist, um eine Anschlagfläche für die Mutter zu bilden, aber den Durchtritt des Kabels bzw. Führungselements zu ermöglichen.

Es kann von Vorteil sein, wenn an der Plombierhülse eine Bohrung für einen herkömmlichen Plombierdraht ausgebildet ist. Wenn dann an einem länglichen Adapterelement oder - bei von einem Gehäuse lösbarem Adapterelement - an einem Gehäuse eine weitere entsprechende Bohrung vorgesehen ist, kann bei Bedarf im Einzelfall eine zusätzliche Plombierung bewirkt werden.

Es ist außerdem möglich, Plombierhülsen mit verschiedenen farblichen Kennzeichnungen zu versehen, die verschiedene Verwendungszwecke angeben, wie zum Beispiel für heiße bzw. kalte Leitungen speziell für Wärmemengenmessgeräte. Es werden dann für bestimmte Abmessungen Plombierhülsen mit verschiedenen farblichen Kennzeichnungen angeboten. Beispielsweise könnten Plombierhülsen aus verschiedenfarbigen Kunststoffen gefertigt werden.

Im Falle mindestens eines ringsegmentförmigen Vorsprungs ist es bevorzugt, wenn mindestens zwei in Umfangsrichtung des hülsenförmigen Elements voneinander beabstandete ringsegmentförmige Vorsprünge vorgesehen sind. Diese sind dann so angeordnet, dass ihre inneren Ränder auf derselben ringförmig geschlossenen Linie verlaufen, die bevorzugt senkrecht zur Längsachse des hülsenförmigen Elements verläuft und konzentrisch zu dieser ist und in einer vorteilhaften Ausgestaltung ein gedachter Kreis oder der Rand eines gedachten regelmäßigen Polygons ist. Bevorzugt sind die mehreren ringsegmentförmigen Vorsprünge dabei so angeordnet, dass sie einen unterbrochenen Ring bilden. Durch das Vorsehen von mindestens zwei ringsegmentförmigen Vorsprüngen, die aufgrund der gegenseitigen Beabstandung in Umfangsrichtung separate federnde Elemente bilden, können sich die Vorsprünge über einen größeren Winkelbereich als ein einziger Vorsprung erstrecken, ohne dass die Gefahr besteht, dass die Elastizität der Vorsprünge im Sinne einer einfachen Montage ungünstig beeinflusst wird. Bei genau zwei ringsegmentförmigen Vorsprüngen ist es bevorzugt, wenn diese sich zumindest teilweise gegenüberliegen. Ferner kann es insbesondere bei einer geringen Ausdehnung von mehreren ringsegmentförmigen Vorsprüngen vorteilhaft sein, wenn mindestens drei entlang des Umfangs verteilte ringsegmentförmige Vorsprünge vorhanden sind. In einer bevorzugten Ausgestaltung erstrecken sich die mehreren ringsegmentförmigen Vorsprünge mit ihren inneren Rändern über mindestens 50%, mehr bevorzugt mindestens 75% und am meisten bevorzugt mindestens 95% des Umfangs.

In einer bevorzugten Ausführungsform ist der ringförmige Vorsprung bzw. der mindestens eine ringsegmentförmige Vorsprung federnd ausgebildet. Dabei ist es insbesondere bevorzugt, wenn er sich schräg in Richtung auf das dem Einführende gegenüberliegende Ende des hülsenförmigen Elements erstreckt. Mit anderen Worten verläuft der jeweilige Vorsprung in einem Winkel zu einer zu der Längsachse des hülsenförmigen Elements senkrechten Ebene, so dass sein Verlauf demnach eine axiale Komponente, die von dem Einführende weggerichtet ist, und eine radiale Komponente aufweist, die nach innen auf die Längsachse gerichtet ist. Der Winkel beträgt bevorzugt 10° bis 45° und mehr bevorzugt 15° bis 25°. In dieser Ausführungsform sind der ringförmige Vorsprung bzw. der mindestens eine ringsegmentförmige Vorsprung und die Schwächungszone in der Weise angeordnet und ausgebildet, dass die Schwächungszone in dem Fall irreversibel zerstört wird, dass eine vorbestimmte, in Richtung auf das Einführende des hülsenförmigen Elements wirkende axiale Kraft auf den ringförmigen Vorsprung bzw. den mindestens einen ringsegmentförmigen Vorsprung ausgeübt wird. Dabei bestimmt der Winkel zusammen mit den Abmessungen und den Eigenschaften des Materials des ringförmigen Vorsprung, des ringsegmentförmigen Vorsprungs bzw. der ringsegmentförmigen Vorsprünge dessen bzw. deren Federeigenschaften, so dass der Winkel unter Berücksichtigung von Abmessungen und Materialeigenschaften gewählt werden muss. Die vorbestimmte Kraft ist so gewählt, dass ein Abziehen der Plombierhülse von dem Bauteil ohne irreversible Schäden unmöglich ist.

Die in dieser Weise ausgestaltete Plombierhülse hat den Vorteil, dass sie in besonders einfacher Weise an einem Bauteil montiert werden kann, das entsprechend den obigen Angaben aufgebaut ist. Insbesondere wird das Bauteil demnach im verschraubten Zustand einer Sensorvorrichtung durch eine Mutter und ein längliches, gerades Adapterelement gebildet, das an einem erste Ende so mit einem Gehäuse verbunden ist oder mit einem Gehäuse verbunden werden kann, dass es von diesem vorsteht, wobei die Mutter an dem dem ersten Ende gegegenüberliegenden zweiten Ende des länglichen Adapterelements oder an der Sensorvorrichtung vorgesehen ist und an der Sensorvorrichtung bzw. an dem zweiten Ende des länglichen Adapterelements ein passendes Gewinde vorgesehen ist, mit dem die Mutter zur Befestigung der Sensorvorrichtung an dem länglichen Adapterelement verschraubt werden kann. Im verschraubten Zustand weist das Bauteil entlang seiner Längsachse einen ersten und einen zweiten Abschnitt auf, wobei der erste Abschnitt die Mutter umfasst, d.h. mindestens die Mutter aufweist und beispielsweise neben der Mutter noch angrenzende Bereiche des länglichen Adapterelements umfasst oder durch die Mutter gebildet wird, und wobei der zweite Abschnitt zwischen dem ersten Abschnitt und dem Gehäuse angeordnet ist und zumindest in einem an den ersten Abschnitt angrenzenden Bereich, der aus Richtung der Mutter gesehen mit einem zurückspringenden, umlaufenden Rand beginnt, einen geringeren Durchmesser als der erste Abschnitt hat. Der erste Abschnitt des Bauteils weist dabei einen Durchmesser auf, der größer als der lichte Durchmesser des durch den ringförmigen Vorsprung bzw. den mindestens einen ringsegmentförmigen Vorsprung definierten Abschnitts verringerten lichten Durchmessers des Innenraums des hülsenförmigen Elements aber so gewählt ist, dass der erste Abschnitt des Bauteils in dem Abschnitt größeren lichten Durchmessers zwischen dem Abschnitt verringerten lichten Durchmessers und dem dem Einführende gegenüberliegenden Ende des hülsenförmigen Elements angeordnet werden kann. Ferner ist das hülsenförmige Element so dimensioniert und ausgestaltet, dass es dann, wenn die Plombierhülse in der Weise auf dem durch das längliche Adapterelement und die Mutter gebildeten Bauteil angeordnet ist, dass sich das längliche Adapterelement durch das Einführende in den Innenraum des hülsenförmigen Elements und durch den Abschnitt verringerten lichten Durchmessers erstreckt und dass der erste Abschnitt des Bauteils in dem Abschnitt größeren lichten Durchmessers zwischen dem Abschnitt verringerten lichten Durchmessers und dem dem Einführende gegenüberliegenden Ende des hülsenförmigen Elements angeordnet ist, der Abschnitt des hülsenförmigen Elements zwischen dem Abschnitt verringerten lichten Durchmessers und dem dem Einführende gegenüberliegenden Ende des hülsenförmigen Elements die äußere Umfangsfläche der Mutter und insbesondere eine an der Mutter vorgesehene Schraubprofilierung abdeckt, der Abschnitt des hülsenförmigen Elements zwischen dem Abschnitt verringerten lichten Durchmessers und dem Einführende zumindest einen Teil der bzw. eine äußere Umfangsfläche des länglichen Adapterelements und insbesondere die gesamte Umfangsfläche oder ggf. zumindest eine in vielen Fällen an dem länglichen Adapterelement vorgesehene Schraubprofilierung abdeckt und die Umfangsflächen bzw. insbesondere die Schraubprofilierung bzw. die Schraubprofilierungen nicht zugänglich sind, ohne die Plombierhülse wie oben beschrieben unter irreversibler Zerstörung der Schwächungszone oder eines sonstigen Teils des hülsenförmigen Elements von dem Bauteil zu entfernen.

Ist nun der Abschnitt größeren lichten Durchmessers zwischen dem Einführende und dem Abschnitt verringerten lichten Durchmessers des hülsenförmigen Elements so dimensioniert und ausgebildet, dass das hülsenförmige Element bei mit einem Gehäuse verbundenem länglichen Adapterelement mit seinem Einführende voran in Richtung auf den zurückspringenden, umlaufenden Rand über die Mutter geschoben werden kann, bis die Mutter an dem ringförmigen Vorsprung bzw. an dem mindestens einen ringsegmentförmigen Vorsprung anliegt, dann muss das hülsenförmige Element lediglich weiter in dieselbe Richtung geschoben werden, um die manipulationssichere Abdeckung und die Befestigung der Plombierhülse an dem Bauteil zu bewirken. Bei dieser Prozedur wird der ringförmige Vorsprung bzw. der mindestens eine ringsegmentförmige Vorsprung, der ein federndes Element bildet, durch den Kontakt mit der Mutter von der Längsachse weggebogen, was in vorteilhafter Weise zu einer Aufweitung des lichten Durchmessers des Abschnitt verringerten lichten Durchmessers des hülsenförmigen Elements führt. Sobald der ringförmige Vorsprung bzw. der mindestens eine ringsegmentförmige Vorsprung bei der Montage den zurückspringenden, umlaufenden Rand passiert hat, bewegt sich der ringförmige Vorsprung bzw. der mindestens eine ringsegmentförmige Vorsprung federnd in Richtung auf seine Ruheposition und rastet unter dem eine Rastkante bildenden zurückspringenden, umlaufenden Rand ein, so dass eine Demontage der Plombierhülse verhindert wird.

Durch den gewählten schrägen Verlauf des ringförmigen Vorsprungs bzw. des mindestens einen ringsegmentförmigen Vorsprungs wird dieser bei dem Versuch, die montierte Plombierhülse nach oben von dem Bauteil abzuziehen von der Rastkante in Richtung auf das Einführende gedrückt, was zu einer Verringerung des lichten Innendurchmessers des hülsenförmigen Elements und zu hohen Zugspannungen in dem äußeren Bereich des hülsenförmigen Elements führt, die bei ausreichender Kraftausübung bleibende Schäden an der Schwächungszone bzw. an mindestens einer von mehreren Schwächungszonen und zum Beispiel einen Bruch des hülsenförmigen Elements zur Folge haben. In dieser Weise wird die bereits weiter oben angesprochene Montage durch Aufschieben besonders einfach ermöglicht.

Der ringförmige Vorsprung bzw. der mindestens eine ringsegmentförmige Vorsprung ist so ausgebildet, dass die Plombierhülse in der oben beschriebenen Weise an einem mit einer umlaufenden Rastkante versehenen Bauteil der genannten Art befestigt werden kann und eine Entfernung der Plombierhülse in der oben beschriebenen Weise verhindert wird. In dem Fall, dass die Plombierhülse nur einen einzigen ringsegmentförmigen Vorsprung aufweist, hat dieser dazu bevorzugt eine Winkelausdehnung von mehr als 180°.

Die Plombierhülse ist einfach aufgebaut und kostengünstig herzustellen, da sie keine komplizierten Rastelemente erfordert. Da sie einfach per Hand über ein Bauteil der genannten Art geschoben werden kann, bis sie einrastet, ist kein spezielles Montagewerkzeug erforderlich.

Insbesondere in einer Ausführungsform mit einem oder mehreren schräg verlaufenden, federnden Vorsprüngen ist es ferner von Vorteil, wenn die Schwächungszone durch einen ringförmig umlaufenden Bereich des hülsenförmigen Elements verminderter Dicke des hülsenförmigen Elements gebildet wird. Es ist auch möglich, dass die Schwächungszone nicht durch einen vollständig umlaufenden ringförmigen Bereich gebildet wird, sondern durch einen unterbrochenen ringförmigen Bereich, der mehrere entlang des Umfangs verteilte und voneinander beabstandete ringsegmentförmige Abschnitte verminderter Dicke des hülsenförmigen Elements aufweist. In jedem Fall ist dieser Bereich bevorzugt in der Nähe des Vorsprungs bzw. der Vorsprünge angeordnet. Unabhängig von der konkreten Ausbildung der Schwächungszone kann es auch vorteilhaft sein, wenn in der Schwächungszone eine Öffnung in dem hülsenförmigen Element ausgebildet ist. Auf diese Weise kann die Demontage vereinfacht werden, da ein geeignetes Werkzeug in die Öffnung gesteckt und mit dessen Hilfe in einfacher Weise eine die Schwächungszone zerstörende Kraft ausgeübt werden kann. Beispielsweise kann eine solche Öffnung schlitzförmig sein, so dass in sie die Spitze eines Schlitzschraubendrehers eingeführt werden kann.

In einer bevorzugten Ausgestaltung weist die Plombierhülse zwei durch ein Scharnier verbundene und zur Ausbildung des hülsenförmigen Elements zusammenklappbare Halbschalen auf. Als Scharnier kann insbesondere auch ein Kunststoff- bzw. Filmscharnier zum Einsatz kommen. Das Scharnier verbindet zwei Längskanten der Halbschalen miteinander, und an den diesen gegenüberliegenden Längskanten ist jeweils eine Verriegelungseinrichtung vorgesehen. Diese Verriegelungseinrichtungen sind in der Weise angeordnet und ausgebildet, dass sie nach dem Zusammenklappen der Halbschalen mit einem die Schwächungszone bildenden Verriegelungselement so miteinander verbunden werden können, dass ein Auseinanderklappen der Halbschalen verhindert wird. Durch das Vorsehen des Scharniers und die Befestigung der beiden Halbschalen aneinander ist die Verbindung der beiden Halbschalen zur Ausbildung des hülsenförmigen Elements in einfacher Weise möglich. Dies erleichtert die Vormontage der Plombierhülse im Werk, insbesondere in der oben beschriebenen Weise in einer Position, die ein einfaches Aufschieben über die Mutter ermöglicht. Bei Bedarf wird aber auch eine Montage vor Ort bei der Installation vereinfacht. Auch in dieser Ausführungsform können der Vorsprung und die Schwächungszone in der zuvor dargestellten Weise so ausgebildet und angeordnet sein, dass das hülsenförmige Element zur Montage mit seinem Einführende voran über die Mutter und zumindest einen Teil des länglichen Adapterelements geschoben wird, bis der ringförmigen Vorsprung bzw. der mindestens eine ringsegmentförmige Vorsprung unter einem eine Rastkante bildenden zurückspringenden, umlaufenden Rand der oben angegebenen Art an dem Bauteil einrastet, und dass das beschriebene Abziehen der Plombierhülse von dem Bauteil nicht möglich ist, ohne eine Kraft auf die Schwächungszone auszuüben, die diese irreversibel zerstört.

Dabei ist es ferner bevorzugt, wenn das Verriegelungselement durch eine längliche Steckplombe gebildet wird, die an ihren beiden gegenüberliegenden Enden jeweils einen Endabschnitt vergrößerten Durchmessers hat. Die Verriegelungseinrichtungen weisen dann jeweils eine Bohrung auf und sind in der Weise ausgebildet und angeordnet, dass die Bohrungen nach dem Zusammenklappen der Halbschalen fluchtend angeordnet sind und die Steckplombe durch beide Bohrungen so hindurch gesteckt werden kann, dass sich die beiden Endabschnitte vergrößerten Durchmessers außerhalb der Bohrungen befinden und die Steckplombe nicht aus den Bohrungen herausgezogen werden kann, ohne die Steckplombe irreversibel zu zerstören. Da die Schwächungszone in diesem Fall durch ein separates Element gebildet wird, ergibt sich der Vorteil, dass nach einer Demontage oder einer versuchten Manipulation der Hauptteil des hülsenförmigen Elements bzw. der Plombierhülse wiederverwendet werden kann.

Unabhängig von der genauen Ausführungsform ist es bevorzugt, wenn die Plombierhülse aus Kunststoff ausgebildet ist.

Es ist in vorteilhafter Weise möglich, die Plombierhülse oder zumindest das hülsenförmige Element einstückig auszubilden.

Auch ist es in einer vorteilhaften Ausgestaltung vorgesehen, dass von der Innenfläche des hülsenförmigen Elements mindestens ein Führungsvorsprung in Richtung auf dessen Längsachse vorsteht. Derartige Führungsvorsprünge können in vorteilhafter Weise eine Zentrierung der Plombierhülse an einem Bauteil der genannten Art bewirken. Dazu werden die Führungsvorsprünge jeweils an das fragliche Bauteil angepasst. Ist die Mutter beispielsweise eine Sechskantmutter, könnten Führungsvorsprünge so angeordnet und ausgebildet sein, dass sie sich auf den Seitenflächen der Sechskantmutter abstützen und unter anderem eine Vororientierung in Rotationsrichtung bewirken.

Aus den obigen Erläuterungen ergibt sich bereits, dass die Plombierhülse in vorteilhafter Weise als Teil einer Kombination bzw. eines Systems vorgesehen sein kann, die bzw. das neben der Plombierhülse eine Sensorvorrichtung zur Befestigung an einem länglichen, geraden Adapterelement aufweist, das an einem erste Ende so mit einem Gehäuse verbunden ist oder mit einem Gehäuse verbunden werden kann, dass es von diesem vorsteht, und das so konstruiert ist, wie es weiter unten in Bezug auf eine Kombination bzw. ein System beschrieben wird, das zusätzlich auch noch ein derartiges längliches Adapterelement aufweist. Es ist bevorzugt, wenn die Plombierhülse wie oben bereits dargestellt verschiebbar an der Sensorvorrichtung befestigt ist, zum Beispiel indem das hülsenförmige Element ein Kabel der Sensorvorrichtung oder ein anderes Führungselement umgibt. Dabei ist es bevorzugt, wenn das hülsenförmige Element nach dem Befestigen der Sensorvorrichtung an einem länglichen Adapterelement durch Verschrauben einer Mutter, die an einem Ende des länglichen Adapterelements oder an der Sensorvorrichtung vorgesehen ist, mit einem passenden Gewinde an der Sensorvorrichtung bzw. an dem Ende des länglichen Adapterelements, mit seinem Einführende über die Mutter und zumindest einen angrenzenden Abschnitt des Adapterelements geschoben werden kann. In einer entsprechenden Ausführungsform kann die Mutter einen Teil der Sensorvorrichtung bilden und das hülsenförmige Element verschiebbar oberhalb der Mutter angeordnet und befestigt sein. Dann ist es bevorzugt, wenn sich in der oben angegebenen Weise ein Kabel der Sensorvorrichtung oder ein anderes Führungselement durch die Mutter hindurch erstrecken, so dass das hülsenförmige Element entlang des Kabels bzw. des Führungselements geführt in Richtung auf die Mutter verschoben werden kann.

Eine derartige Kombination stellt eine vormontierte, montagefertige Baugruppe dar.

Eine Sensorvorrichtung, die zum Einsatz mit der Plombierhülse der vorliegenden Erfindung geeignet oder bestimmt ist bzw. die einen Teil der erfindungsgemäßen Kombination bildet, kann in vorteilhafter Weise eine Sensorvorrichtung aufweisen, die in einer vorteilhaften Ausgestaltung eine - bevorzugt gerade und/oder bevorzugt rohrförmige - Tragkomponente aufweist, in deren Innerem oder an der sich ein Sensorelement - wie z.B. ein Temperatursensorelement - befindet. Derart ausgebildete Sensorvorrichtungen sind bekannt und werden eingesetzt, um eine physikalische Größe, wie z.B. eine Temperatur, eines Mediums im Inneren eines Gehäuses zu bestimmen. Das Sensorelement befindet sich bevorzugt an dem oder benachbart zu einem Ende der Tragkomponente, das das Einführende der Tragkomponente bildet, mit dem voran die Tragkomponente in das zu vermessende Medium eingebracht wird. In einer vorteilhaften Ausgestaltung erstreckt sich von dem gegenüberliegenden Ende der Tragkomponente ein Kabel zur elektrischen Versorgung des Sensorelements und/oder Signalableitung, wobei das Kabel bevorzugt in Verlängerung der Tragkomponente verläuft. Im Einsatz wird die Tragkomponente mit dem Einführende voran in das Gehäuse eingeführt, so dass sich das Ende in dem Medium befindet und zwischen dem Sensorelement und dem Medium eine die gewünschte Messung ermöglichende Wechselwirkung stattfinden kann.

In einer im Rahmen der vorliegenden Erfindung bevorzugten Ausgestaltung dieser Sensorvorrichtung ist an der Tragkomponente und bevorzugt an dem dem Einführende gegenüberliegenden Ende der Tragkomponente oder in dessen Nähe eine Mutter und bevorzugt eine Überwurfmutter in der Weise befestigt, dass die Tragkomponente durch die Mutter verläuft und die Mutter gedreht aber nicht entlang der Tragkomponente verschoben werden kann. Es ist aber auch möglich, dass die Mutter drehfest mit der Tragkomponente verbunden ist. Durch diese Konstruktionen kann die Tragkomponente in der beschriebenen Weise durch ein von dem Gehäuse vorstehendes und an dem diesem gegenüberliegenden Ende mit einem Gewinde und einer Bohrung versehenes längliches Adapterelement in das Gehäuseinnere eingeführt werden, bis die Mutter das Gewinde des Adapterelements berührt. Anschließend kann die Mutter mit dem Gewinde verschraubt werden, um die Sensorvorrichtung an dem Adapterelement zu befestigen, wobei zur Abdichtung in geeigneter Weise Dichtungen zwischen der Sensorvorrichtung und dem Adapterelement bzw. dem Gehäuse angeordnet sind. Bei Verwendung einer solchen Sensorvorrichtung ist die Mutter demnach an der Sensorvorrichtung angeordnet.

Es ist auch möglich, dass die oben beschriebene Kombination bzw. das oben beschriebene System ferner ein längliches, gerades Adapterelement der bereits erwähnten Art aufweist, das an einem erste Ende so mit einem Gehäuse verbunden ist oder mit einem Gehäuse verbunden werden kann, dass es von diesem vorsteht. An dem dem ersten Ende gegegenüberliegenden zweiten Ende des länglichen Adapterelements oder an der Sensorvorrichtung ist eine Mutter vorgesehen, und an der Sensorvorrichtung bzw. an dem zweiten Ende des länglichen Adapterelements ist ein passendes Gewinde vorgesehen, mit dem die Mutter zur Befestigung der Sensorvorrichtung an dem länglichen Adapterelement verschraubt werden kann. Im verschraubten Zustand weist das durch das längliche Adapterelement und die Mutter gebildete Bauteil entlang seiner Längsachse einen ersten und einen zweiten Abschnitt auf, wobei der erste Abschnitt die Mutter umfasst oder durch diese gebildet wird und wobei der zweite Abschnitt zwischen dem ersten Abschnitt und dem Gehäuse angeordnet ist und zumindest in einem an den ersten Abschnitt angrenzenden Bereich, der aus Richtung der Mutter gesehen mit einem zurückspringenden, umlaufenden Rand beginnt, einen geringeren Durchmesser als der erste Abschnitt hat.

Der erste Abschnitt des Bauteils weist einen Durchmesser auf, der größer als der lichte Durchmesser des durch den ringförmigen Vorsprung bzw. den mindestens einen ringsegmentförmigen Vorsprung definierten Abschnitts verringerten lichten Durchmessers des Innenraums des hülsenförmigen Elements aber so gewählt ist, dass der erste Abschnitt des Bauteils in dem Abschnitt größeren lichten Durchmessers zwischen dem Abschnitt verringerten lichten Durchmessers und dem dem Einführende gegenüberliegenden Ende des hülsenförmigen Elements angeordnet werden kann.

Das hülsenförmige Element ist so dimensioniert und ausgestaltet, dass es dann, wenn die Plombierhülse in der oben bereits beschriebenen Weise so auf dem durch das längliche Adapterelement und die Mutter gebildeten Bauteil angeordnet ist, dass sich das längliche Adapterelement durch das Einführende in den Innenraum des hülsenförmigen Elements und durch den Abschnitt verringerten lichten Durchmessers erstreckt und dass der erste Abschnitt des Bauteils in dem Abschnitt größeren lichten Durchmessers zwischen dem Abschnitt verringerten lichten Durchmessers und dem dem Einführende gegenüberliegenden Ende des hülsenförmigen Elements angeordnet ist, der Abschnitt des hülsenförmigen Elements zwischen dem Abschnitt verringerten lichten Durchmessers und dem dem Einführende gegenüberliegenden Ende des hülsenförmigen Elements die äußere Umfangsfläche der Mutter und insbesondere eine an der Mutter vorgesehene Schraubprofilierung abdeckt, der Abschnitt des hülsenförmigen Elements zwischen dem Abschnitt verringerten lichten Durchmessers und dem Einführende eine äußere Umfangsfläche des länglichen Adapterelements und insbesondere die gesamte Umfangsfläche oder ggf. zumindest eine möglicherweise an dem länglichen Adapterelement vorgesehene Schraubprofilierung abdeckt und die Umfangsflächen und insbesondere die Schraubprofilierung bzw. die Schraubprofilierungen nicht zugänglich sind, ohne - wie oben bereits erläutert wurde - die Plombierhülse unter irreversibler Zerstörung der Schwächungszone oder eines sonstigen Teils des hülsenförmigen Elements von dem Bauteil zu entfernen oder an diesem weit genug zu verschieben.

Es ist von Bedeutung, dass die Plombierhülse so dimensioniert ist, dass für ein Wergzeug keine Angriffsfläche geboten wird, um eine Schraubverbindung zur Entfernung der Sensorvorrichtung zu lösen. Dazu zählt neben der durch die Mutter bewirkten Schraubverbindung in Fällen, in denen das längliche Adapterelement als gegenüber dem Gehäuse separates Element ausgebildet ist, auch eine Schraubverbindung zwischen dem länglichen Adapterelement und dem Gehäuse.

Insgesamt können das längliche Adapterelement, die Sensorvorrichtung, das Bauteil und die Plombierhülse eine der oben bereits detailliert erläuterten Ausgestaltungen aufweisen.

So ist es, wenn die Plombierhülse in einer der oben beschriebenen Ausführungsformen mit einem federnden, ringförmigen und bevorzugt schräg verlaufenden Vorsprung bzw. mindestens einem federnden, ringsegmentförmigen und bevorzugt schräg verlaufenden Vorsprung vorgesehen ist, beispielsweise bevorzugt, wenn der Abschnitt größeren lichten Durchmessers zwischen dem Einführende und dem Abschnitt verringerten lichten Durchmessers des hülsenförmigen Elements so dimensioniert und ausgebildet ist, dass das hülsenförmige Element bei mit einem Gehäuse verbundenem länglichen Adapterelement mit seinem Einführende voran in Richtung auf den zurückspringenden, umlaufenden Rand über die Mutter geschoben werden kann, bis die Mutter an dem ringförmigen Vorsprung bzw. an dem mindestens einen ringsegmentförmigen Vorsprung anliegt, und dann weiter geschoben werden kann, während sich der ringförmige Vorsprung bzw. der mindestens eine ringsegmentförmige Vorsprung so verbiegt, dass sich der Winkel zwischen ihm und einer zur Längsachse des hülsenförmigen Elements senkrechten Ebene vergrößert, und der ringförmige Vorsprung bzw. der mindestens eine ringsegmentförmige Vorsprung diesen Winkel wieder verkleinert und hinter dem zurückspringenden, umlaufenden Rand einrastet. Weist die Sensorvorrichtung die oben angegebene Konstruktion mit einer länglichen Tragkomponente auf, so ist es bevorzugt, wenn das hülsenförmige Element beim Aufschieben entlang eines Abschnitts der Tragkomponente und/oder eines Abschnitts eines Kabels geführt werden kann, wobei der jeweilige Abschnitt das hülsenförmige Element durchläuft. Dazu kann die Mutter beabstandet von dem dem Einführende gegenüberliegenden Ende der Tragkomponente angeordnet und das hülsenförmige Element zwischen letzterem Ende und der Mutter angeordnet sein. Alternativ, in dem Fall, dass die Mutter am Ende der Tragkomponente angeordnet ist, oder zusätzlich kann sich in der beschriebenen Weise ein Kabel von dem Ende der Tragkomponente erstrecken. Es kann in vorteilhafter Weise vorgesehen sein, dass die Plombierhülse auf diesen Komponenten verschiebbar vormontiert und bevorzugt nicht von der Kombination entfernt werden kann.

Ferner ist es bei einer solchen Ausführungsform bevorzugt, wenn das längliche Adapterelement ein separates Element ist und an seinem ersten Ende ein Außengewinde aufweist, mit dem es zur Verbindung mit einem Gehäuse in ein entsprechendes, in dem Gehäuse vorgesehenes Innengewinde eingeschraubt werden kann. Dabei ist das hülsenförmige Element so dimensioniert und ausgestaltet, dass der Abschnitt des hülsenförmigen Elements zwischen dem Abschnitt verringerten lichten Durchmessers und dem Einführende dann, wenn das längliche Adapterelement mit seinem Außengewinde am ersten Ende vollständig in das Innengewinde des Gehäuses eingeschraubt worden ist und die Plombierhülse bei hergestellter Schraubverbindung zwischen der Sensorvorrichtung und dem mit dem Gehäuse verbundenen länglichen Adapterelement in der beschriebenen Weise so auf dem durch die Mutter und durch das längliche Adapterelement gebildeten Bauteil angeordnet ist, dass sich das längliche Adapterelement durch das Einführende in den Innenraum des hülsenförmigen Elements und durch den Abschnitt verringerten lichten Durchmessers erstreckt und dass der erste Abschnitt des Bauteils in dem Abschnitt größeren lichten Durchmessers zwischen dem Abschnitt verringerten lichten Durchmessers und dem dem Einführende gegenüberliegenden Ende des hülsenförmigen Elements angeordnet ist, den sich zwischen dem Gehäuse und der Mutter erstreckenden Abschnitt des länglichen Adapterelements vollständig abdeckt. Insbesondere ist es dann in vorteilhafter Weise auch nicht möglich, die Plombierhülse an dem Bauteil zu verschieben, um einen zum Angreifen eines Werkzeuges zum Herausschrauben geeigneten Teil des länglichen Adapterelements freizulegen. Dieser Vorteil wird durch die beschriebene Anpassung der Abmessungen des hülsenförmigen Elements in Bezug auf das jeweilige längliche Adapterelement und die jeweilige Mutter erreicht.

Eine entsprechende Ausgestaltung kann auch dann vorteilhaft gewählt werden, wenn das längliche Adapterelement einstückig mit einem Gehäuse ausgebildet und an seinem ersten Ende mit dem Gehäuse verbunden ist.

Die Mutter ist bevorzugt eine Überwurfmutter.

Die Erfindung wird im Folgenden anhand von Ausführungsbeispielen unter Bezugnahme auf die Zeichnungen näher erläutert.
- Figur 1a: zeigt eine Ansicht eines Anschlussgehäuses für z.B. einen Wärmezähler, von dem ein längliches Adapterelement vorsteht, an dessen Ende eine Sensorvorrichtung mit Hilfe einer Mutter durch Verschraubung befestigt ist, wobei eine Plombierhülse gemäß einer Ausführungsform der Erfindung oberhalb der Mutter und noch nicht in ihrer Abdeckposition angeordnet ist.
- Figur 1b: zeigt das Anschlussgehäuses, das längliche Adapterelement, die Sensorvorrichtung und die Plombierhülse der Figur 1a, wobei die Plombierhülse in der Weise über die Mutter und das längliche Adapterelement geschoben worden ist, dass beide vollständig abgedeckt sind.
- Figur 2: zeigt eine Querschnittsansicht des länglichen Adapterelements, der Sensorvorrichtung und der Plombierhülse in einem Figur 1b entsprechenden Zustand.
- Figur 3a: zeigt eine Ansicht einer Halbschale einer Plombierhülse gemäß einer Ausführungsform der Erfindung.
- Figur 3b: zeigt eine Ansicht zweier hülsenförmiger Teile einer Plombierhülse gemäß einer weiteren Ausführungsform der Erfindung.
- Figur 4a: zeigt eine Ansicht einer weiteren Ausführungsform einer Plombierhülse gemäß einer Ausführungsform der Erfindung.
- Figur 4b: zeigt eine Ansicht von oben auf eine um eine Mutter angeordnete Plombierhülse gemäß Figur 4a.
- Figur 4c: zeigt eine Schnittansicht einer Verschlusseinrichtung der Plombierhülse gemäß den Figuren 4a und 4b.

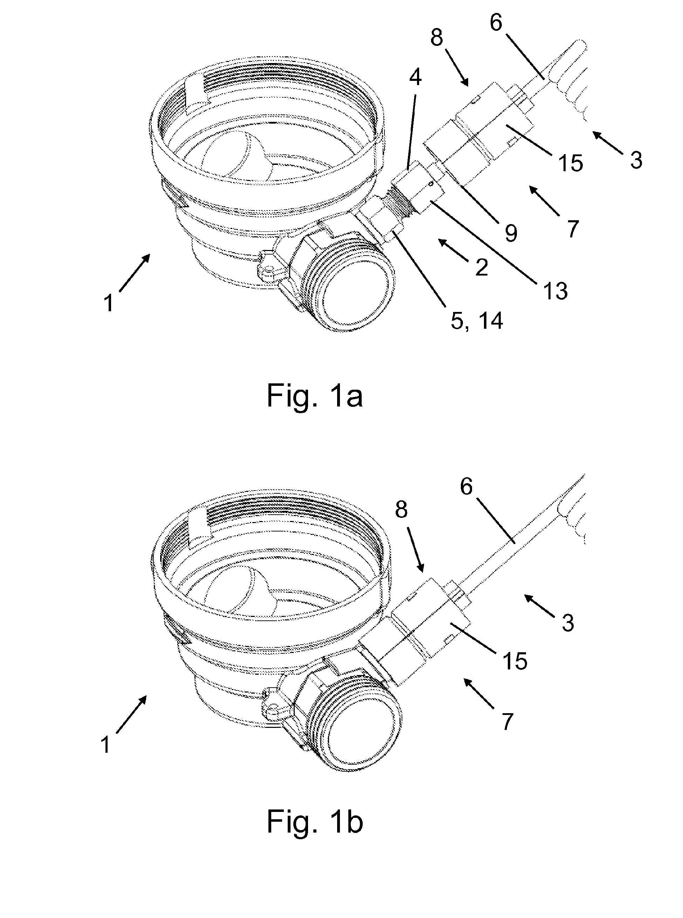

In Figur 1a ist eine Ansicht eines Anschlussgehäuses 1 für z.B. einen Wärmezähler (nicht gezeigt) dargestellt, von dem ein längliches Adapterelement 2 vorsteht, an dessen Ende eine Sensorvorrichtung 3 mit Hilfe einer Überwurfmutter 4 durch Verschraubung befestigt ist, die z.B. eine Sechskantmutter sein kann. Das längliche Adapterelement 2 ist seinerseits mit seinem gegenüberliegenden Ende in das Gehäuse 1 eingeschraubt. Zu diesem Zweck weist es eine Schraubprofilierung auf, die z.B. eine Sechskant-Schraubprofilierung 5 sein kann.

Die Sensorvorrichtung 3 kann beispielsweise eine Temperatursensorvorrichtung sein und sich durch eine Längsbohrung in dem länglichen Adapterelement 2 und eine entsprechende Bohrung in dem Gehäuse 1 mit einem Sensorelement in das Gehäuseinnere erstrecken.

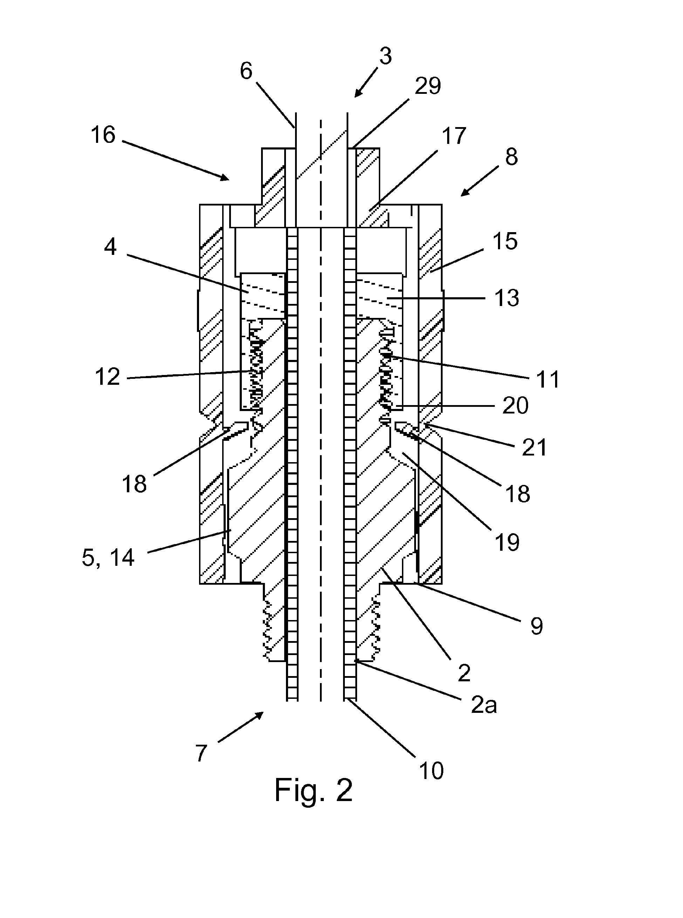

Die Sensorvorrichtung 3 weist ein Kabel 6 auf, das in Längsrichtung von einem Hauptteil 7 der Sensorvorrichtung 3 weg verläuft. Um dieses Kabel 6 herum und entlang diesem verschiebbar ist eine Plombierhülse 8 angeordnet. In Figur 1a deckt sie weder die Mutter 4, noch das längliche Adapterelement 2 ab. Sie kann aber entlang des Kabels 6 in Richtung auf die Mutter 4 bewegt und mit einem Einführende 9 voran so über die Mutter 4 und das Adapterelement 2 geschoben werden, dass diese Komponenten vollständig in der Plombierhülse 8 angeordnet sind und durch diese verdeckt werden. Dieser Zustand, in dem nicht mehr an der Mutter 4 oder dem Adapterelement 2 angegriffen werden kann, um diese von dem Gehäuse 1 zu entfernen, ist in Figur 1b gezeigt. Wie nachfolgend anhand der Figur 2 erläutert wird, ist die Plombierhülse 8 in diesem Zustand durch eine Rastverbindung in der Weise an dem durch das Adapterelement 2 und die Mutter 4 gebildeten Bauteil befestigt, das sie nicht mehr so verschoben werden kann, dass eine Umfangsfläche des Adapterelements 2 oder der Mutter 4 freigelegt wird bzw. eine Umfangsfläche, die eine zum Schrauben von Adapterelement 2 oder Mutter 4 ausreichende Angriffsfläche für ein Werkzeug bietet.

In Figur 2 ist eine schematische Querschnittsansicht des Figur 1b entsprechenden Zustands der Plombierhülse 8 gezeigt, wobei das Gehäuse 1 in der Figur weggelassen worden ist.

Die Sensorvorrichtung 3 weist ein rohrförmiges Element 10 auf (in Figur 2 nicht in seiner gesamten Länge gezeigt), das durch eine zentrale, axiale Bohrung 2a in dem Adapterelement 2 hindurch verläuft und sich nach Befestigung an einem Gehäuse 1 in dessen Innenraum erstreckt. Dazu ist an dem nicht dargestellten, in der Figur unteren Ende des rohrförmigen Elements 10 ein Sensor angeordnet, und das Versorgungs- und Ableitungskabel 6 verläuft durch das Rohr 10. In der Nähe des in der Figur 2 oberen Endes des Rohrs 10 ist eine dieses umschließende Mutter 4 drehbar, aber axial nicht verschiebbar befestigt. Die Sensorvorrichtung 3 ist an dem in Figur 2 oberen Ende des Adapterelements 2 befestigt, indem die Mutter 4 mit ihrem Innengewinde 11 auf ein entsprechendes Außengewinde 12 am oberen Ende des Adapterelements 2 aufgeschraubt worden ist.

Zur Montage ist es lediglich erforderlich, das rohrförmige Element 10 durch die axiale Bohrung im Adapterelement 2 hindurchzustecken, bis die Mutter 4 an dessen oberem Ende anliegt und die Mutter 4 dann festzuschrauben. Zu diesem Zweck befindet sich die Plombierhülse 8 zunächst nicht in der in Figur 2 gezeigten Position, sondern ist entlang des eine Fortsetzung des Rohrs 10 nach oben bildenden Versorgungs- und Ableitungskabels 6 nach oben verschoben, so dass die Schraubprofilierungen 13 und 14 von Mutter 4 bzw. Adapterelement 2 frei zugänglich sind. Nach der Verschraubung wird die Plombierhülse 8 dann mit ihrem Einführende 9 voran entlang des Kabels 6 nach unten über die Mutter 4 und das Adapterelement 2 in die in Figur 2 gezeigte Position geschoben.

Die Plombierhülse 8 weist ein hülsenförmiges Element 15 auf, das an dem dem Einführende 9 gegenüberliegenden Ende 16 durch eine ringförmige, koaxiale Endwand 17 verschlossen ist. Von der Innenwand des hülsenförmigen Elements 15 erstrecken sich zwei gegenüberliegende, ringsegmentförmige Vorsprünge 18 nach innen in Richtung auf die Längsachse der Anordnung, wobei sie in Bezug auf eine zur Längsachse senkrechte Ebene schräg von dem Einführende 9 weg verlaufen. Es ist ersichtlich, dass diese Anordnung das oben dargestellte Aufschieben der Plombierhülse 8 ermöglicht, wobei die Vorsprünge 18 schließlich in einen zurückspringenden Ringraum 19 in dem durch die Mutter 4 und das Adapterelement 2 gebildeten Bauteil einrasten. Das Schieben der Plombierhülse 8 nach oben wird dann durch das Zusammenwirken der Vorsprünge 18 und des den zurückspringenden Ringraum 19 in Richtung auf die Mutter 4 begrenzende Rastkante 20 verhindert, die im dargestellten Beispiel durch die Unterseite der Mutter 4 bereitgestellt wird.

Es ist zwar bei ausreichender Kraftaufwendung prinzipiell möglich, die Plombierhülse 8 weit genug nach oben zu bewegen, um zumindest die Schraubprofilierung 14 des Adapterelements 2 zugänglich zu machen. Allerdings ist in der Nähe der Vorsprünge 18 in dem hülsenförmigen Element 15 ein ringförmig umlaufender Bereich 21 verringerter Dicke ausgebildet, der eine Schwächungszone darstellt. Diese ist in Abhängigkeit der Anordnung und Ausgestaltung der Vorsprünge 18 so angeordnet und ausgestaltet, dass ein Kraft, die ausreicht, um die Plombierhülse 8 zum teilweisen Freilegen der Schraubprofilierung 14 nach oben zu schieben, zu einer irreversiblen, manipulationsindikativen Zerstörung der Schwächungszone führt.

Ferner stehen von der Innenfläche des hülsenförmigen Elements 15 Führungsvorsprünge 22 vor, die sich an der beispielsweise sechskantförmigen Schraubprofilierung 13 der Mutter 4 abstützen, um eine Führung und Orientierung zu erreichen.

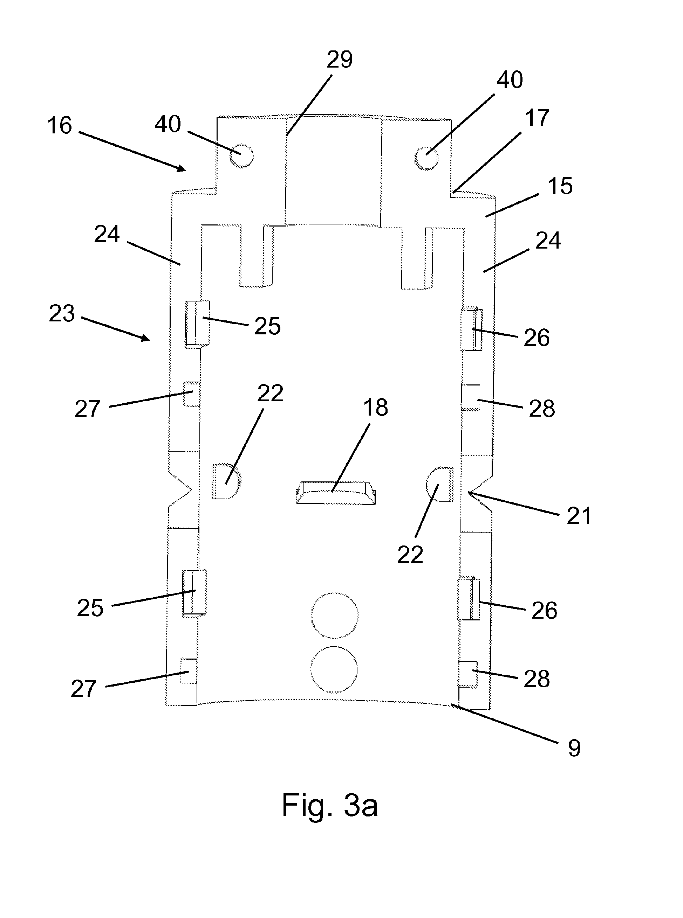

Das hülsenförmige Element 15 kann in vorteilhafter Weise aus zwei Halbschalen 23 zusammengesetzt sein, von denen eine in Figur 3a gezeigt ist. Sie weist entlang ihrer in Längsrichtung verlaufenden Ränder 24 komplementäre Rastvorsprünge 26 bzw. Rastvertiefungen 25 auf, die so angeordnet sind, dass die Halbschale 23 und eine entsprechend ausgebildete zweite Halbschale mit Hilfe der Rastelemente 25, 26 so miteinander verbunden werden können, dass sie ohne deren Zerstörung nicht mehr voneinander gelöst werden können. Um die Befestigung der Halbschalen aneinander zu erleichtern, sind ferner komplementäre Ausrichtvorsprünge und -vertiefungen 27 bzw. 28 vorgesehen. Befinden sich wie in Figur 3a an einem Rand 24 nur Rastvorsprünge 26 und an dem anderen Rand 24 nur Rastvertiefungen 25, so dienen die Ausrichtvorsprünge und -vertiefungen 27 bzw. 28 zusätzlich zur Verhinderung einer seitlichen Verschiebung der beiden Halbschalen 23 gegeneinander. Befinden sich an jedem Rand 24 sowohl mindestens ein Rastvorsprung 26 als auch mindestens eine Rastvertiefung 25, so dienen die Ausrichtvorsprünge und -vertiefungen 27 bzw. 28 bevorzugt im wesentlichen nur dazu, die Ausrichtung und Befestigung der Halbschalen 23 zu erleichtern. Die Verbindung der Halbschalen erfolgt bevorzugt vor der Auslieferung der Sensorvorrichtung 3, wobei die Plombierhülse 8 wie oben beschrieben um das Kabel 6 der Sensorvorrichtung 3 herum geschlossen wird. Das Kabel verläuft dann durch eine axiale Bohrung 29 in der ringförmigen oberen Endwand 17.

Am oberen Ende der Plombierhülse 8 sind zwei Bohrungen 40 vorgesehen, durch die zur Bewirkung einer zusätzlichen Plombierung ein Plombierdraht (nicht gezeigt) geführt werden kann, der auch durch mindestens eine Bohrung in dem Adapterelement 2 oder dem Anschlussgehäuse verläuft und ringförmig geschlossen ist.

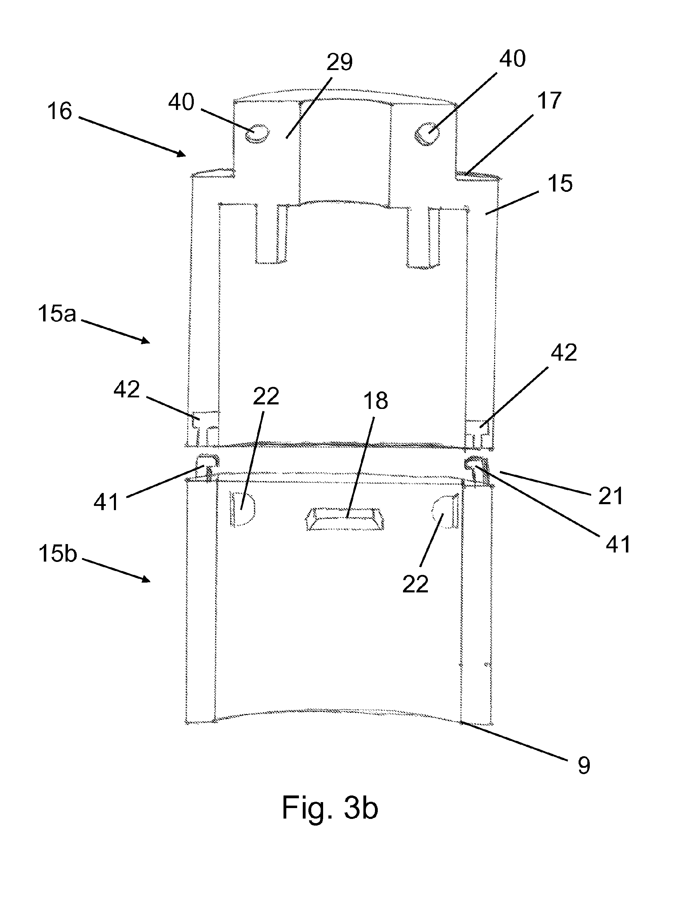

In einer alternativen Ausgestaltung, die schematisch in Figur 3b veranschaulicht ist, weist das hülsenförmige Element 15 zwei jeweils separat hülsenförmige Teile 15a, 15b auf, wobei das untere, das Einführende 9 umfassende Teil 15b an seinem oberen Rand hakenförmige Rastvorsprünge 41 und das obere Teil 15a an seinem unteren Rand L- oder T-förmig ausgebildete Rastvertiefungen 42 aufweist. Die Teile 15a, 15b können dann zur Ausbildung des hülsenförmigen Elements 15 miteinander verbunden werden, indem die Rastvorsprünge 41 in die Rastvertiefungen 42 eingeführt werden, wobei sich die Rastvorsprünge 41 zunächst verbiegen und schließlich in die Rastvertiefungen 42 einrasten. Das hülsenförmige Element 15 der auf diese Weise entstehenden Plombierhülse 8 ist dann im wesentlichen mit dem hülsenförmigen Element 15 identisch, das durch die Zusammenfügung zweier Halbschalen der in Figur 3a dargestellten Art entsteht. Im Unterschied dazu wird die Schwächungszone 21 des gemäß Figur 3b gebildeten hülsenförmigen Elements 15 jedoch durch die Rastvorsprünge 41 gebildet, die unter Berücksichtigung der mechanischen Eigenschaften der Vorsprünge 18 so ausgebildet sind, dass sie wie die Schwächungszone 21 der Figur 3a irreversibel beschädigt werden, wenn in der beschriebenen Weise eine bestimmte Kraft auf die Vorsprünge 18 ausgeübt wird.

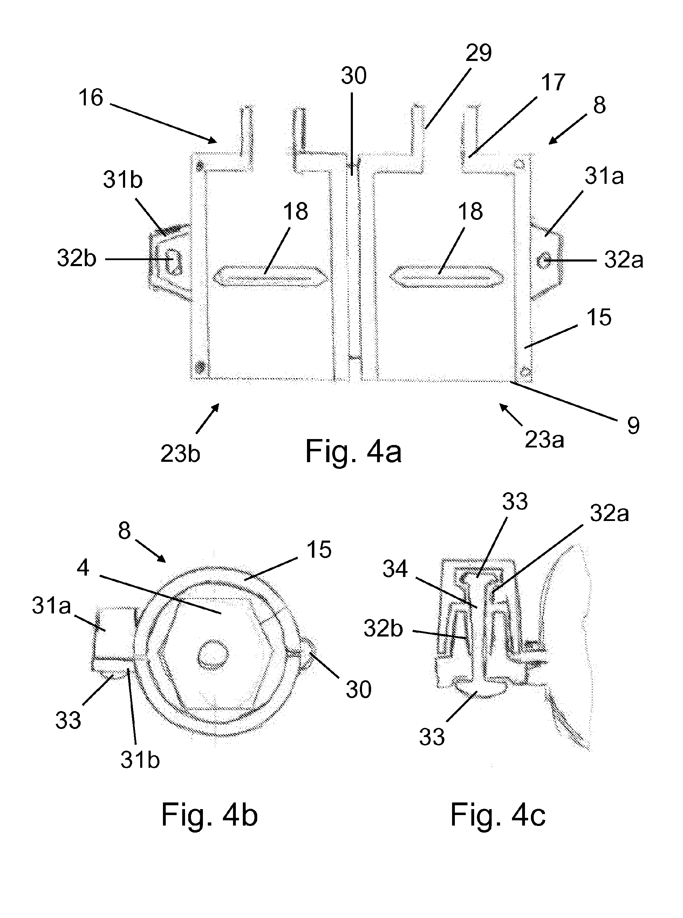

In einer weiteren alternativen Ausgestaltung, die schematisch in den Figuren 4a bis 4c veranschaulicht ist, sind die beiden Halbschalen 23a, 23b durch ein Filmscharnier 30 zusammenklappbar miteinander verbunden. Dadurch wird die Vormontage erleichtert. Zur Verbindung der dem Filmscharnier 30 gegenüberliegenden Längskanten sind an diesen Verriegelungselemente 31a bzw. 31b vorgesehen. Der um die Mutter 4 herum geschlossene Zustand ist in Figur 4b gezeigt, und aus der teilweisen Querschnittsansicht der Figur 4c lässt sich die konstruktive Ausgestaltung der Verriegelung entnehmen. Die Verriegelungselemente 31a und 31b sind so angeordnet, dass bei geschlossenen Halbschalen 23a, 23b Bohrungen 32a bzw. 32b in den Verriegelungselementen 31a und 31b fluchtend zueinander angeordnet sind. In diese wird dann eine an beiden Enden zur Verhinderung einer Entfernung mit radial vorspringenden Endabschnitten 33 versehene Steckplombe 34 eingebracht, die so ausgestaltet ist, dass sie eine Schwächungszone im obigen Sinne darstellt. Alternativ oder zusätzlich kann auch eine ringförmige Schwächungszone der in den Figuren 2 und 3 gezeigten Art vorgesehen sein.

## Patentansprüche

1. Plombierhülse zur Manipulationssicherung einer Schraubverbindung zwischen einer Sensorvorrichtung (3) und einem von einem Gehäuse (1) vorstehenden geraden, länglichen Adapterelement (2), die durch Verschrauben einer Mutter (4), die an dem dem Gehäuse (1) gegenüberliegenden Ende des länglichen Adapterelements (2) oder an der Sensorvorrichtung (3) vorgesehen ist, mit einem passenden Gewinde an der Sensorvorrichtung (3) bzw. an dem Ende des länglichen Adapterelements (2) hergestellt ist, wobei das durch das längliche Adapterelement (2) und die Mutter (4) gebildete Bauteil entlang seiner Längsachse einen ersten und einen zweiten Abschnitt aufweist, wobei der erste Abschnitt die Mutter (4) umfasst und wobei der zweite Abschnitt zwischen dem ersten Abschnitt und dem Gehäuse (1) angeordnet ist und zumindest in einem an den ersten Abschnitt angrenzenden Bereich einen geringeren Durchmesser als der erste Abschnitt hat,
wobei die Plombierhülse (8) ein hülsenförmiges Element (15) mit
- einer geraden Längsachse,
- einem offenen Einführende (9),
- einem quer zur Längsachse verlaufenden ringförmigen Vorsprung oder mindestens einem ringsegmentförmigen Vorsprung (18), der sich von der Innenfläche des hülsenförmigen Elements (15) in Richtung auf die Längsachse erstreckt und von jedem der beiden gegenüberliegenden Enden (9, 16) des hülsenförmigen Elements (15) beabstandet ist, wobei der der Innenfläche abgewandte innere Rand des ringförmigen Vorsprungs bzw. des mindestens einen ringsegmentförmigen Vorsprungs (18) auf einer ringförmig geschlossenen Linie verläuft und der ringförmige Vorsprung bzw. der mindestens eine ringsegmentförmige Vorsprung (18) einen Abschnitt verringerten lichten Durchmessers des Innenraums des hülsenförmigen Elements definiert, auf dessen beiden Seiten sich jeweils ein Abschnitt größeren lichten Durchmessers befindet, und
- einer in dem hülsenförmigen Element (15) vorgesehene Schwächungszone (21; 34) aufweist,
wobei die Schwächungszone (21; 34) und der Vorsprung (18) so angeordnet und ausgebildet sind, dass dann, wenn die Plombierhülse (8) in der Weise auf dem durch das längliche Adapterelement (2) und die Mutter (4) gebildeten Bauteil angeordnet ist, dass sich das längliche Adapterelement (2) durch das Einführende (9) in den Innenraum des hülsenförmigen Elements (15) und durch den Abschnitt verringerten lichten Durchmessers erstreckt und dass der erste Abschnitt des Bauteils mit einem gegenüber dem verringerten lichten Durchmesser größeren Durchmesser zwischen dem Abschnitt verringerten lichten Durchmessers und dem dem Einführende (9) gegenüberliegenden Ende (16) des hülsenförmigen Elements (15) angeordnet ist, das hülsenförmige Element (15) nicht von dem Bauteil entfernt werden kann, ohne die Schwächungszone (21; 34) oder einen anderen Teil des hülsenförmigen Elements (15) irreversibel zu zerstören.

2. Plombierhülse nach Anspruch 1, die mindestens zwei in Umfangsrichtung des hülsenförmigen Elements (15) voneinander beabstandete ringsegmentförmige Vorsprünge (18) aufweist.

3. Plombierhülse nach Anspruch 1 oder Anspruch 2, bei der der ringförmige Vorsprung bzw. der mindestens eine ringsegmentförmige Vorsprung (18) federnd ausgebildet ist und sich schräg in Richtung auf das dem Einführende (9) gegenüberliegende Ende (16) des hülsenförmigen Elements (15) erstreckt, so dass er in einem Winkel zu einer zu der Längsachse des hülsenförmigen Elements (15) senkrechten Ebene verläuft, wobei der ringförmige Vorsprung bzw. der mindestens eine ringsegmentförmige Vorsprung (18) und die Schwächungszone (21; 34) in der Weise angeordnet und ausgebildet sind, dass die Schwächungszone (21; 34) in dem Fall irreversibel zerstört wird, dass eine vorbestimmte, in Richtung auf das Einführende (9) des hülsenförmigen Elements (15) wirkende axiale Kraft auf den ringförmigen Vorsprung bzw. den mindestens einen ringsegmentförmigen Vorsprung (18) ausgeübt wird.

4. Plombierhülse nach einem der vorhergehenden Ansprüche, bei der die Schwächungszone (21) durch einen ringförmig umlaufenden Bereich des hülsenförmigen Elements (15) verminderter Dicke des hülsenförmigen Elements (15) gebildet wird.

5. Plombierhülse nach einem der vorhergehenden Ansprüche, bei der in der Schwächungszone (21; 34) eine Öffnung in dem hülsenförmigen Element (15) ausgebildet ist.

6. Plombierhülse nach einem der vorhergehenden Ansprüche, die zwei durch ein Scharnier (30) verbundene und zur Ausbildung des hülsenförmigen Elements (15) zusammenklappbare Halbschalen (23) aufweist, an deren dem Scharnier (30) gegenüberliegenden Rändern (24) jeweils eine Verriegelungseinrichtung (31a, 31b) vorgesehen ist, wobei die Verriegelungseinrichtungen (31a, 31b) in der Weise angeordnet und ausgebildet sind, dass sie nach dem Zusammenklappen der Halbschalen (23) mit einem die Schwächungszone (34) bildenden Verriegelungselement (34) so miteinander verbunden werden können, dass ein Auseinanderklappen der Halbschalen (23a, 23b) verhindert wird.

7. Plombierhülse nach Anspruch 6, bei der das Verriegelungselement (34) durch eine längliche Steckplombe gebildet wird, die an ihren beiden gegenüberliegenden Enden jeweils einen Endabschnitt (33) vergrößerten Durchmessers hat, und bei der die Verriegelungseinrichtungen (31a, 31b) jeweils eine Bohrung (32a, 32b) aufweisen und in der Weise ausgebildet und angeordnet sind, dass die Bohrungen (32a, 32b) nach dem Zusammenklappen der Halbschalen (23a, 23b) fluchtend angeordnet sind und die Steckplombe (34) durch beide Bohrungen (32a, 32b) so hindurch gesteckt werden kann, dass sich die beiden Endabschnitte (33) vergrößerten Durchmessers außerhalb der Bohrungen (32a, 32b) befinden und die Steckplombe (34) nicht aus den Bohrungen (32a, 32b) herausgezogen werden kann, ohne die Steckplombe (34) irreversibel zu zerstören.

8. Plombierhülse nach einem der vorhergehenden Ansprüche, die aus Kunststoff ausgebildet ist.

9. Plombierhülse nach einem der vorhergehenden Ansprüche, bei der mindestens ein Führungsvorsprung (22) vorgesehen ist, der von der Innenfläche des hülsenförmigen Elements (15) in Richtung auf dessen Längsachse vorsteht.

10. Kombination, die eine Plombierhülse (8) nach einem der Ansprüche 1 bis 9 und eine Sensorvorrichtung (3) zur Befestigung an einem länglichen, geraden Adapterelement (2) aufweist, das an einem erste Ende so mit einem Gehäuse (1) verbunden ist oder mit einem Gehäuse (1) verbunden werden kann, dass es von diesem vorsteht, wobei
- an dem dem ersten Ende gegenüberliegenden zweiten Ende des länglichen Adapterelements (2) oder an der Sensorvorrichtung (3) eine Mutter (4) vorgesehen ist und an der Sensorvorrichtung (3) bzw. an dem zweiten Ende des länglichen Adapterelements (2) ein passendes Gewinde vorgesehen ist, mit dem die Mutter (4) zur Befestigung der Sensorvorrichtung (3) an dem länglichen Adapterelement (2) verschraubt werden kann,
- im verschraubten Zustand das durch das längliche Adapterelement (4) und die Mutter (4) gebildete Bauteil entlang seiner Längsachse einen ersten und einen zweiten Abschnitt aufweist, wobei der erste Abschnitt die Mutter (4) umfasst und wobei der zweite Abschnitt zwischen dem ersten Abschnitt und dem Gehäuse (1) angeordnet ist und zumindest in einem an den ersten Abschnitt angrenzenden Bereich, der aus Richtung der Mutter (4) gesehen mit einem zurückspringenden, umlaufenden Rand (20) beginnt, einen geringeren Durchmesser als der erste Abschnitt hat,
- der erste Abschnitt des Bauteils einen Durchmesser aufweist, der größer als der lichte Durchmesser des durch den ringförmigen Vorsprung bzw. den mindestens einen ringsegmentförmigen Vorsprung (18) definierten Abschnitts verringerten lichten Durchmessers des Innenraums des hülsenförmigen Elements (15) aber so gewählt ist, dass der erste Abschnitt des Bauteils in dem Abschnitt größeren lichten Durchmessers zwischen dem Abschnitt verringerten lichten Durchmessers und dem dem Einführende (9) gegenüberliegenden Ende (16) des hülsenförmigen Elements (15) angeordnet werden kann, und
- das hülsenförmige Element (15) so dimensioniert und ausgestaltet ist, dass es dann, wenn die Plombierhülse (8) in der Weise auf dem durch das längliche Adapterelement (2) und die Mutter (4) gebildeten Bauteil angeordnet ist, dass sich das längliche Adapterelement (2) durch das Einführende (9) in den Innenraum des hülsenförmigen Elements (15) und durch den Abschnitt verringerten lichten Durchmessers erstreckt und dass der erste Abschnitt des Bauteils in dem Abschnitt größeren lichten Durchmessers zwischen dem Abschnitt verringerten lichten Durchmessers und dem dem Einführende (9) gegenüberliegenden Ende (16) des hülsenförmigen Elements (15) angeordnet ist,
(a) der Abschnitt des hülsenförmigen Elements (15) zwischen dem Abschnitt verringerten lichten Durchmessers und dem dem Einführende (9) gegenüberliegenden Ende (16) des hülsenförmigen Elements (15) die äußere Umfangsfläche der Mutter (4) abdeckt,
(b) der Abschnitt des hülsenförmigen Elements (15) zwischen dem Abschnitt verringerten lichten Durchmessers und dem Einführende (9) eine äußere Umfangsfläche des länglichen Adapterelements (2) abdeckt und
(c) die Umfangsflächen nicht zugänglich sind, ohne die Plombierhülse (8) unter irreversibler Zerstörung der Schwächungszone (21; 34) oder eines sonstigen Teils des hülsenförmigen Elements (15) von dem Bauteil zu entfernen.

11. Kombination nach Anspruch 10, die ferner ein längliches, gerades Adapterelement (2) aufweist, das an einem erste Ende so mit einem Gehäuse (1) verbunden ist oder mit einem Gehäuse (1) verbunden werden kann, dass es von diesem vorsteht, wobei
- an dem dem ersten Ende gegenüberliegenden zweiten Ende des länglichen Adapterelements (2) oder an der Sensorvorrichtung (3) eine Mutter (4) vorgesehen ist und an der Sensorvorrichtung (3) bzw. an dem zweiten Ende des länglichen Adapterelements (2) ein passendes Gewinde vorgesehen ist, mit dem die Mutter (4) zur Befestigung der Sensorvorrichtung (3) an dem länglichen Adapterelement (2) verschraubt werden kann,
- im verschraubten Zustand das durch das längliche Adapterelement (2) und die Mutter (4) gebildete Bauteil entlang seiner Längsachse einen ersten und einen zweiten Abschnitt aufweist, wobei der erste Abschnitt die Mutter (4) umfasst und wobei der zweite Abschnitt zwischen dem ersten Abschnitt und dem Gehäuse (1) angeordnet ist und zumindest in einem an den ersten Abschnitt angrenzenden Bereich, der aus Richtung der Mutter (4) gesehen mit einem zurückspringenden, umlaufenden Rand (20) beginnt, einen geringeren Durchmesser als der erste Abschnitt hat,
- der erste Abschnitt des Bauteils einen Durchmesser aufweist, der größer als der lichte Durchmesser des durch den ringförmigen Vorsprung bzw. den mindestens einen ringsegmentförmigen Vorsprung (18) definierten Abschnitts verringerten lichten Durchmessers des Innenraums des hülsenförmigen Elements (15) aber so gewählt ist, dass der erste Abschnitt des Bauteils in dem Abschnitt größeren lichten Durchmessers zwischen dem Abschnitt verringerten lichten Durchmessers und dem dem Einführende (9) gegenüberliegenden Ende (16) des hülsenförmigen Elements (15) angeordnet werden kann, und
- das hülsenförmige Element (15) so dimensioniert und ausgestaltet ist, dass es dann, wenn die Plombierhülse (8) in der Weise auf dem durch das längliche Adapterelement (2) und die Mutter (4) gebildeten Bauteil angeordnet ist, dass sich das längliche Adapterelement (2) durch das Einführende (9) in den Innenraum des hülsenförmigen Elements (15) und durch den Abschnitt verringerten lichten Durchmessers erstreckt und dass der erste Abschnitt des Bauteils in dem Abschnitt größeren lichten Durchmessers zwischen dem Abschnitt verringerten lichten Durchmessers und dem dem Einführende (9) gegenüberliegenden Ende (16) des hülsenförmigen Elements (15) angeordnet ist,
(a) der Abschnitt des hülsenförmigen Elements (15) zwischen dem Abschnitt verringerten lichten Durchmessers und dem dem Einführende (9) gegenüberliegenden Ende (16) des hülsenförmigen Elements (15) die äußere Umfangsfläche der Mutter (4) abdeckt,
(b) der Abschnitt des hülsenförmigen Elements (15) zwischen dem Abschnitt verringerten lichten Durchmessers und dem Einführende (9) eine äußere Umfangsfläche des länglichen Adapterelements (2) abdeckt und
(c) die Umfangsflächen nicht zugänglich sind, ohne die Plombierhülse (8) unter irreversibler Zerstörung der Schwächungszone (21; 34) oder eines sonstigen Teils des hülsenförmigen Elements (15) von dem Bauteil zu entfernen.

12. Kombination nach Anspruch 10 oder Anspruch 11, bei der der ringförmige Vorsprung bzw. der mindestens eine ringsegmentförmige Vorsprung (18) federnd ausgebildet ist, wobei der Abschnitt größeren lichten Durchmessers zwischen dem Einführende (9) und dem Abschnitt verringerten lichten Durchmessers des hülsenförmigen Elements (15) so dimensioniert und ausgebildet ist, dass das hülsenförmige Element (15) bei mit einem Gehäuse (1) verbundenem länglichen Adapterelement (2) mit seinem Einführende (9) voran in Richtung auf den zurückspringenden, umlaufenden Rand (20) über die Mutter (4) geschoben werden kann, bis die Mutter (4) an dem ringförmigen Vorsprung bzw. an dem mindestens einen ringsegmentförmigen Vorsprung (18) anliegt, und dann weiter geschoben werden kann, während sich der ringförmige Vorsprung bzw. der mindestens eine ringsegmentförmige Vorsprung (18) so verbiegt, dass sich der Winkel zwischen ihm und einer zur Längsachse des hülsenförmigen Elements (15) senkrechten Ebene vergrößert, und der ringförmige Vorsprung bzw. der mindestens eine ringsegmentförmige Vorsprung (18) diesen Winkel wieder verkleinert und hinter dem zurückspringenden, umlaufenden Rand (20) einrastet.

13. Kombination nach Anspruch 11 oder Anspruch 12, bei der das längliche Adapterelement (2) ein separates Element ist und an seinem ersten Ende ein Außengewinde (12) aufweist, mit dem es zur Verbindung mit einem Gehäuse (1) in ein entsprechendes, in dem Gehäuse (1) vorgesehenes Innengewinde (11) eingeschraubt werden kann, wobei das hülsenförmige Element (15) so dimensioniert und ausgestaltet ist, dass der Abschnitt des hülsenförmigen Elements (15) zwischen dem Abschnitt verringerten lichten Durchmessers und dem Einführende (9) dann, wenn
- das längliche Adapterelement (2) mit seinem Außengewinde (12) am ersten Ende vollständig in das Innengewinde (11) des Gehäuses (1) eingeschraubt worden ist und
- die Plombierhülse (8) bei hergestellter Schraubverbindung zwischen der Sensorvorrichtung (3) und dem mit einem Gehäuse (1) verbundenen länglichen Adapterelement (2) in der Weise auf dem durch die Mutter (4) und durch das längliche Adapterelement (2) gebildeten Bauteil angeordnet ist, dass sich das längliche Adapterelement (2) durch das Einführende (9) in den Innenraum des hülsenförmigen Elements (15) und durch den Abschnitt verringerten lichten Durchmessers erstreckt und dass der erste Abschnitt des Bauteils in dem Abschnitt größeren lichten Durchmessers zwischen dem Abschnitt verringerten lichten Durchmessers und dem dem Einführende (9) gegenüberliegenden Ende (16) des hülsenförmigen Elements (15) angeordnet ist,
den sich zwischen dem Gehäuse (1) und der Mutter (4) erstreckenden Abschnitt des länglichen Adapterelements (2) vollständig abdeckt.

14. Kombination nach Anspruch 11 oder Anspruch 12, bei der das längliche Adapterelement (2) einstückig mit einem Gehäuse (1) ausgebildet und an seinem ersten Ende mit dem Gehäuse (1) verbunden ist, wobei das hülsenförmige Element (15) so dimensioniert und ausgestaltet ist, dass der Abschnitt des hülsenförmigen Elements (15) zwischen dem Abschnitt verringerten lichten Durchmessers und dem Einführende (9) dann, wenn
- die Plombierhülse (8) bei hergestellter Schraubverbindung zwischen der Sensorvorrichtung (3) und dem mit einem Gehäuse (1) verbundenen länglichen Adapterelement (2) in der Weise auf dem durch die Mutter (4) und durch das längliche Adapterelement (2) gebildeten Bauteil angeordnet ist, dass sich das längliche Adapterelement (2) durch das Einführende (9) in den Innenraum des hülsenförmigen Elements (15) und durch den Abschnitt verringerten lichten Durchmessers erstreckt und dass der erste Abschnitt des Bauteils in dem Abschnitt größeren lichten Durchmessers zwischen dem Abschnitt verringerten lichten Durchmessers und dem dem Einführende (9) gegenüberliegenden Ende (16) des hülsenförmigen Elements (15) angeordnet ist,
den sich zwischen dem Gehäuse (1) und der Mutter (4) erstreckenden Abschnitt des länglichen Adapterelements (2) vollständig abdeckt.
